# FASCICULE DE BREVET EUROPEEN

(11) **EP 3 234 535 B1**
(45) Date de publication et mention de la délivrance du brevet: **08.01.2020**
(21) Numéro de dépôt: 15813072.4
(22) Date de dépôt: 18.12.2015
(51) Int. Cl.: G01L 19/14

(54) **CAPTEUR DE PRESSION ADAPTE AUX MESURES DE PRESSION EN MILIEU AGRESSIF**
DRUCKSENSOR FÜR DRUCKMESSUNG IN EINER AGGRESSIVEN UMGEBUNG
PRESSURE SENSOR SUITED TO MEASURING PRESSURE IN AN AGGRESSIVE ENVIRONMENT

(30) Priorité: 19.12.2014 FR 1462940
(43) Date de publication de la demande: 25.10.2017
(73) Titulaire: Commissariat à l'Énergie Atomique et aux Énergies Alternatives, 75015 Paris (FR)
(72) Inventeur: DANEL, Jean-Sébastien, 38130 Echirolles (FR); DIEM, Bernard, 38130 Echirolles (FR); POLIZZI, Jean-Philippe, 38000 Grenoble (FR)
(74) Mandataire: Brevalex
(86) Numéro de dépôt international: PCT/EP2015/080519
(87) Numéro de publication internationale: WO 2016/097306

(56) Documents cités:
- WO-A1-96/07351
- US-A- 4 274 423
- US-A1- 2013 139 589

## Description

### DOMAINE TECHNIQUE ET ÉTAT DE LA TECHNIQUE ANTÉRIEURE

La présente invention se rapporte à une installation comportant capteur de pression apte à mesurer avantageusement au moins des basses pressions, par exemple à partir de 0,1 bar environ et apte à être utilisé dans des milieux sévères.

Il existe actuellement de nombreux types de capteurs de pression, dont les capteurs microélectroniques basés sur le micro-usinage du silicium. Ces capteurs microélectroniques sont généralement réalisés à partir d'un substrat en silicium, sur une zone qualifiée de « *puce* ». Une partie de cette puce de silicium, souvent centrale, est amincie de façon à réaliser une membrane. La zone non-amincie de la puce forme un cadre qui assure le maintien de la membrane. Le cadre et la membrane sont assemblés soit directement sur la pièce soumise à la pression soit sur un support plan, fixé sur cette pièce. Une cavité est ainsi formée entre ce support (ou la pièce servant de support) et la membrane. Ainsi, sous l'effet d'une différence de pression entre l'intérieur de la cavité et l'extérieur du capteur, la membrane se déforme. La déformation de la membrane est convertie grâce à un transducteur mécanoélectrique en une grandeur électrique, mesurée par des moyens de traitement situés à l'extérieur du capteur ou intégrés sur celui-ci.

La mesure de la pression peut se faire par l'intermédiaire d'une ou plusieurs jauges de contrainte, par exemple des jauges en matériau piézorésistif placées sur la membrane.

La ou les jauges de contraintes est ou sont reliée(s) à une connectique qui achemine le signal vers une unité de traitement.

Le capteur est généralement réalisé par des techniques de la microélectronique par dépôt et gravure de couches sur un support. La membrane forme alors la face avant du capteur.

Le capteur est disposé de sorte que la membrane soit en contact avec le milieu dont on souhaite mesurer la pression.

Les connexions des jauges de contraintes à la connectique peuvent se faire alors en face avant. Cependant dans le cas où le capteur est utilisé pour mesurer la pression dans un milieu sévère, i.e. en contact avec un fluide autre que l'air, les connexions se trouveraient en contact avec le milieu et peuvent subir une attaque physico-chimique, le capteur pourrait alors être endommagé. Pour cela on prévoit d'encapsuler la membrane munie des jauges et les connexions des jauges dans une cavité remplie d'huile qui n'endommage pas les jauges et les connexions, l'huile transmettant la pression à la membrane. Cependant la mise en œuvre d'huile pour transmettre la pression pose des problèmes en termes de métrologie, car l'huile perturbe notamment le comportement en température et une telle réalisation présente un coût élevée.

Pour pallier ce problème, les connexions peuvent être réalisées en face arrière. Pour cela, elles sont réalisées à travers le support. Cette technique exige la mise au point et le contrôle de technologies très élaborées pour être fiables. Le coût de fabrication du capteur est donc élevé. Un tel capteur est par exemple décrit dans le document US5955771.

Les documents WO 96/07351 et US 4 274 423 décrivent des cathéters destinés à mesurer la pression sanguine. Ils comportent à leur extrémité introduite dans le corps d'un être vivant une membrane apte à se déformer sous l'effet d'une différence de pression et des moyens pour mesurer la déformation de la membrane.

Le document US2013/139589 décrit d'une part un capteur de pression comportant un corps comprenant à une extrémité une zone de mesure comportant une cavité formée dans un substrat céramique, délimitée par une membrane sensible à la pression, et des électrodes capacitives formées dans le substrat céramique. Le document US2013/139589 décrit d'autre part un capteur de pression monté à travers une paroi entre une zone de vide et une zone à haute pression. La zone de mesure est disposée d'un côté de la paroi et la zone de connexion est disposée de l'autre côté de la paroi.

### EXPOSÉ DE L'INVENTION

Le but de la présente invention est alors de réaliser une installation comportant capteur de pression apte à mesurer des pressions sur une large gamme de valeur, les pressions pouvant varier de la basse pression à la haute pression, et en particulier dans des milieux sévères.

Dans la présente demande on entend par « pressions faibles » des pressions de l'ordre de moins de 0,1 bar jusqu'à quelques bars, avec une précision et/ou résolution de l'ordre du millibar.

Le but énoncé ci-dessus est atteint en partie par un capteur de pression comportant un corps s'étendant dans un plan, dit "plan du capteur", comprenant une extrémité portant une zone sensible destinée à détecter la variation de pression et une extrémité portant une zone de connexion destinée à connecter le capteur à un système extérieur, la zone sensible comportant une cavité délimitée par des parois dont une au moins est mobile ou déformable sous l'effet de la différence de pression entre l'environnement dont on souhaite mesurer la pression et la cavité, ladite paroi mobile ou déformable étant située dans un plan parallèle au plan du capteur. Des moyens de mesure de la déformation de ladite paroi déformable sont disposés à l'intérieur de la cavité, une connectique relie les moyens de mesure à l'extérieur, la connectique s'étendant des moyens de mesure à la zone de connexion par l'intérieur du corps.

En mettant en œuvre une paroi mobile ou déformable, le capteur selon l'invention est capable de détecter des faibles variations de pression par exemple de l'ordre de quelques millibars jusqu'à plusieurs dizaines de bars, voire plus. La gamme de pression est donnée notamment par les dimensions de la membrane déformable.

Par ailleurs, le fait de disposer les moyens de mesure à l'intérieur de la cavité et les moyens de connexion dans le corps permet de les protéger de l'environnement extérieur. La durée et la robustesse du capteur sont donc augmentées.

En outre, le fait que la membrane soit dans un plan parallèle au plan du capteur simplifie sensiblement la réalisation des moyens de connexion, en particulier la connexion entre les moyens de mesure et les moyens de connexion est simplifiée, car on peut utiliser un ou des matériaux pour réaliser les moyens de connexion qui ne présentent pas une tenue particulière aux attaques physico-chimiques. Il en résulte un coût de fabrication réduit.

De plus, un capteur de pression relative peut être réalisé simplement en gravant une tranchée entre la cavité et la zone de connexion.

La présente invention a alors pour objet une installation selon la revendication 1.

Par exemple, les moyens de mesure comportent au moins une jauge en matériau piézorésistif ou piézoélectrique disposée sur une face de la paroi mobile ou déformable située dans la cavité. De préférence, les jauges en matériau piézorésistif ou piézoélectrique sont montées en pont de Wheatstone.

En variante, les moyens de mesure sont des moyens de mesure capacitifs.

De préférence, le canal fluidique s'étend parallèlement la paroi mobile ou déformable.

Le capteur peut comporter dans la zone de mesure, au moins deux parois déformables situées au moins au repos dans un ou des plans parallèles au plan du capteur.

Dans un exemple avantageux, le corps comporte un premier substrat et un deuxième substrat solidarisés l'un à l'autre, les moyens de connexion étant tout ou partie disposés entre et/ou dans le premier substrat et le deuxième substrat.

La paroi mobile ou déformable peut comporter une membrane. En variante, la paroi mobile comporte une zone centrale sensiblement indéformable, une zone périphérique déformable et des moyens destinés à rigidifier la zone périphérique, ceux-ci pouvant comporter au moins une poutre.

La présente invention a également pour objet un procédé de fabrication d'une installation selon la revendication 11.

Après l'étape c), le premier substrat peut être structuré pour former la paroi déformable, par exemple par amincissement au niveau des moyens de mesure.

Lors de l'étape a), la formation d'une couche isolante électrique sur les moyens de connexion peut être prévue.

Le procédé de fabrication peut comporter, lors de l'étape b), la réalisation dans le premier et/ ou le deuxième substrat d'un canal entre la partie de la cavité et la partie de la zone de connexion, par exemple par gravure, ledit canal étant destiné à former la connexion fluidique entre la cavité et la zone de connexion du capteur.

### BRÈVE DESCRIPTION DES DESSINS

La présente invention sera mieux comprise sur la base de la description qui va suivre et des dessins en annexe sur lesquels:
- la figure 1 est une vue de dessus d'un exemple de réalisation de capteur selon l'invention,
- la figure 2 est une vue en coupe longitudinale du capteur de la figure 1 le long du plan B-B,
- la figure 3 est une vue en coupe transversale du capteur de la figure 1 le long du plan A-A,
- la figure 4 est une vue en coupe transversale du capteur de la figure 1 le long du plan C-C,
- les figures 5A à 5I sont des représentations schématiques d'étapes d'un exemple d'un procédé de réalisation d'un capteur de la figure 1,
- la figure 6 est une vue en coupe longitudinale d'un exemple de réalisation d'un capteur de pression relative,
- la figure 7 est une vue en coupe longitudinale schématique partielle d'une variante de réalisation d'un capteur selon l'invention comportant deux membranes juxtaposées,
- la figure 8 est une vue en coupe longitudinale schématique partielle d'une variante de réalisation d'un capteur selon l'invention dans lequel la cavité est délimitée par deux membranes,
- la figure 9A est une vue de dessus partielle d'une variante de réalisation d'un capteur selon l'invention dans lequel la cavité comporte une paroi mobile,
- la figure 9B est une vue en coupe de la figure 9A le long du plan D-D,
- la figure 10 est une représentation d'une variante de montage d'un capteur sur une paroi.

### EXPOSÉ DÉTAILLÉ DE MODES DE RÉALISATION PARTICULIERS

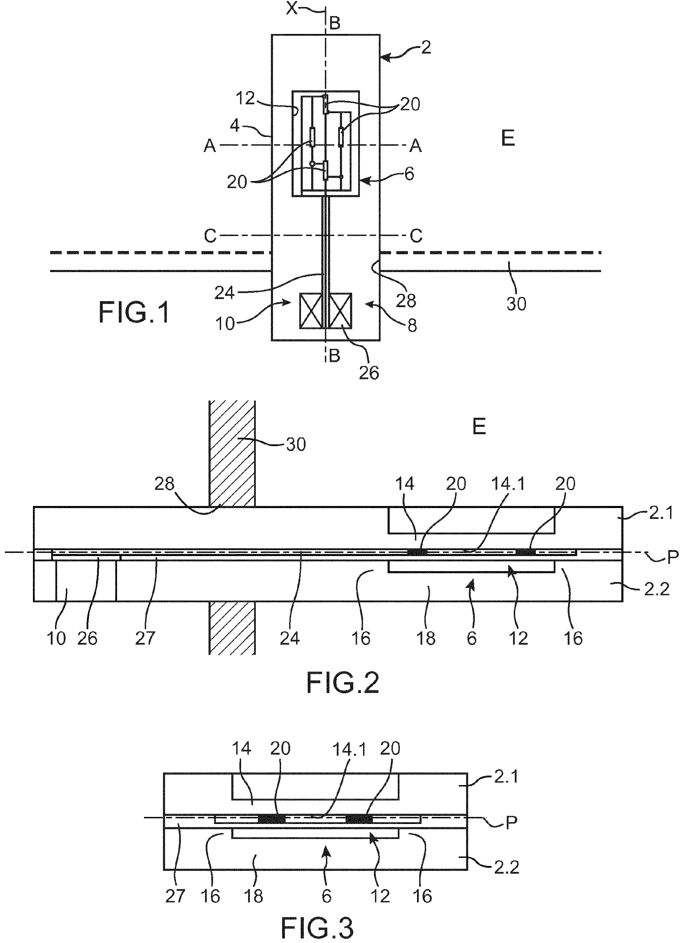

Sur les figures 1 à 4, on peut voir un exemple de réalisation d'un capteur selon la présente invention. Il s'agit d'un capteur de mesure de pression par rapport à une pression de référence, par exemple un capteur de pression absolue. Dans la suite de la description, un exemple de capteur de pression relative sera décrit.

Le capteur qui va être décrit en détail comporte au moins une paroi déformable sous l'effet d'une différence de pression. Mais un capteur comportant une paroi mobile sous l'effet d'une différence de pression sans déformation substantielle de la paroi ne sort pas du cadre de la présente invention, ce mode de réalisation est décrit ci-dessous.

Le capteur comporte un corps 2 de forme allongée s'étendant dans un plan P, dit plan du capteur. Dans l'exemple représenté, le corps 2 s'étend le long d'un axe longitudinal X.

Le corps 2 comporte une première extrémité longitudinale 4 portant une zone sensible 6 destinée à être en contact avec le milieu dont on souhaite mesurer la pression, dit le milieu à mesurer E. Le corps comporte une deuxième extrémité longitudinale 8 opposée à la première extrémité longitudinale 4 portant une zone de connexion 10 destinée à permettre la connexion électrique du capteur à un système extérieur de manière isolée par rapport à le milieu dont on souhaite mesurer la pression. Le système extérieur est par exemple un circuit électronique de traitement.

Le milieu à mesurer E peut être un milieu sévère, ou agressif tels qu'ambiance de gaz acides, liquides polaires, carburants, etc., ce milieu peut être le siège d'attaques physico-chimiques. Il est à noter que l'eau peut également être considérée comme un milieu agressif.

La zone sensible 6 comporte une cavité 12 étanche située dans le corps 2. La pression à l'intérieur de la cavité 12 est une pression de référence, par exemple le vide. La cavité est délimitée par des parois dont au moins une paroi est apte à se déformer sous la différence de pression entre celle du milieu extérieur et la pression de référence dans la cavité 12. Dans l'exemple représenté, la cavité est délimitée par une membrane 14 formant la paroi supérieure, apte à se déformer sous la différence de pression, des parois latérales 16 et une paroi inférieure 18 ne se déformant pas sous la différence de pression. La membrane s'étend dans un plan parallèle au plan P du capteur.

Le capteur comporte des moyens pour mesurer la déformation de la membrane 14 sous l'effet de la différence de pression. Ces moyens sont disposés à l'intérieur de la cavité, ainsi ils sont protégés du milieu à mesurer. Ces moyens de mesure comportent les moyens de conversion mécano-électrique qui convertissent la déformation de la membrane due à la différence de pression en signal électrique qui sera traité par un système extérieur (non représenté).

Dans l'exemple représenté, les moyens de conversion mécano-électrique sont formés par au moins une jauge de contrainte en matériau piézorésistif, par exemple en silicium, ou en matériau piézoélectrique par exemple en AIN.

De préférence, les moyens de mesure comportent plusieurs jauges de contrainte 20 qui peuvent être montées en pont de Wheatstone. Dans l'exemple représenté, quatre jauges de contrainte sont mises en œuvre. Les jauges sont disposées sur une face intérieure 14.1 de la membrane, de sorte que la déformation de la membrane, sous l'effet de la pression extérieure, induise dans les jauges un déséquilibre électrique. La membrane se déforme soit vers l'intérieur de la cavité 12, soit vers l'extérieur de la cavité 12 et les jauges se déforment suivant la courbure de la membrane 14. Leur déformation est proportionnelle à la différence de pression entre la cavité 12 et le milieu à mesurer E.

Le dispositif comporte également des moyens de connexion des moyens de mesure 20 au système extérieur qui est destiné à traiter les signaux émis par les moyens de mesure 20 et des moyens de connexion des jauges entre elles dans le cas où il y a plusieurs jauges. Les moyens de connexion sont formés par un ou plusieurs conducteurs électriques 24 reliant les jauges à la zone de connexion 10. Les conducteurs électriques sont situés à l'intérieur du corps du dispositif et s'étendent sensiblement le long de l'axe longitudinal X. Les conducteurs électriques 24 débouchent dans la zone de connexion 10 dans laquelle ils sont en contact avec un ou plusieurs plots de contact 26 par lesquels le dispositif est destiné à être relié au système extérieur.

Les conducteurs électriques s'étendent également avantageusement dans un plan parallèle au plan du capteur. Ainsi la réalisation de la connexion aux moyens de mesure est simplifiée. Elle ne nécessite pas de traverser la face arrière du substrat.

Le ou les conducteurs électriques 24 sont "encapsulés" dans le corps et s'étendent entre la cavité 12 isolée du milieu à mesurer et la zone de connexion 10 qui est également isolée du milieu à mesurer. Ils sont donc protégés du milieu à mesurer.

De manière particulièrement avantageuse, le dispositif est réalisé par des techniques de la microélectronique. Un procédé de réalisation sera décrit en détail.

Le corps est alors avantageusement formé par l'assemblage de deux substrats 2.1, 2.2 et le ou les conducteurs électriques sont par exemple réalisés par formation d'une couche en matériau conducteur par exemple en métal, tel que l'aluminium, l'or, le cuivre, le tungstène, le titane... ou en un semi-conducteur dopé tel que silicium, polysilicium, germanium qui permet de tenir à haute température. Une étape de gravure peut ensuite éventuellement être prévue.

Les conducteurs électriques sont sous forme de pistes conductrices et par exemple réalisées par dépôt d'une ou plusieurs couches par des techniques habituelles en microélectronique, telles que le dépôt physique par phase vapeur (PVD pour "Physical vapor déposition" en terminologie anglo-saxonne) ou par dépôt chimique en phase vapeur (CVD pour "Chemical vapor déposition" en terminologie anglo-saxonne) qui sont ensuite gravées, par exemple par voie chimique humide ou plasma au travers d'un masque de lithographie. De préférence, les plots de contact 26 sont soit réalisés dans cette ou ces couches conductrices, soit par un dépôt supplémentaire spécifique et compatible pour permettre la prise de contact vers l'extérieur par des techniques de type wire bonding. Une couche isolante électrique 27 est prévue sur les pistes.

Par exemple, le capteur est destiné à être monté dans un passage 28 formé dans une paroi 30 séparant le milieu à mesurer et l'environnement extérieur. Le corps 2 du capteur est monté de manière étanche dans le passage 28 à travers la paroi de sorte que la zone de mesure 6 soit dans le milieu à mesurer E et la zone de connexion 10 soit dans l'environnement extérieur.

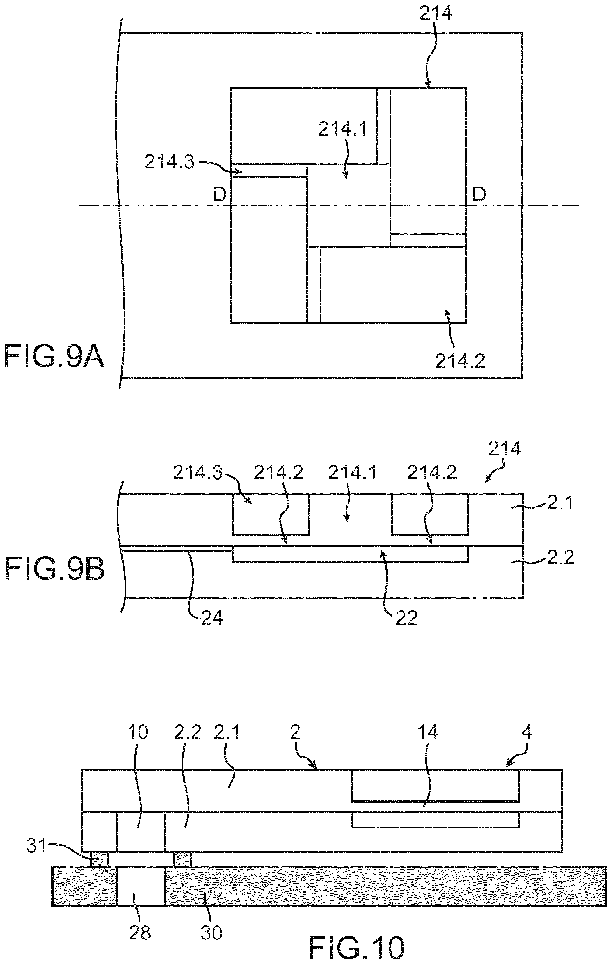

Sur la figure 10, on peut voir une variante de montage du capteur ne faisant pas partie de l'invention, dans laquelle celui-ci est monté sur la paroi et est disposé entièrement dans le milieu et à proximité du passage 28. La zone de connexion 10 est située à proximité du passage 28 et une étanchéité 31 est réalisée entre la zone de connexion 10 et le passage 28 permettant d'isoler les moyens de connexion du milieu et une connexion à un système extérieur situé dans l'environnement extérieur.

Dans l'exemple représenté, la membrane 14 est formée par un amincissement localisé du substrat 2.1 à l'aplomb de la cavité 12. Ainsi le substrat 2.1 présente une épaisseur plus importante autour de la membrane formant un cadre. L'épaisseur du cadre est avantageusement choisie suffisamment importante pour conférer à l'ensemble du capteur, une rigidité suffisante lui permettant d'affronter, si nécessaire, de fortes pressions, qui peuvent être, par exemple, supérieures à 10 MPa voire 100 MPa. Mais il sera compris que tout le substrat 2.1 pourrait être aminci pour présenter une épaisseur constante égale à celle de la membrane, par exemple par un amincissement pleine plaque, puisque le substrat 2.2 apporte également de la rigidité au capteur et pour compenser la faible épaisseur du substrat 2.1. L'accès aux plots de contact 26 est obtenu par gravure du deuxième substrat.

Dans l'exemple représenté, le capteur a une forme rectangulaire et la membrane présente une forme rectangulaire sur la figure 1. En variante, la membrane pourrait être carrée. En variante encore, il pourrait être prévu que la membrane présente une forme circulaire.

A titre d'exemple, l'épaisseur de l'ensemble du capteur, c'est-à-dire des deux substrats 2.1, 2.2 assemblés, est de l'ordre de quelques 100 µm à quelques mm et sa longueur de quelques 100 µm jusqu'à quelques dizaines de millimètres.

A titre d'exemple également, l'épaisseur de la membrane déformable est de l'ordre de quelques micromètres, de préférence inférieure à 100 µm. L'épaisseur de la membrane peut cependant atteindre plusieurs centaines de µm pour la mesure de fortes pressions.

La profondeur de la cavité 12 est par exemple de l'ordre de quelques micromètres jusqu'à plusieurs centaines de micromètres. Cette profondeur est choisie en fonction de la déformation de la membrane et de sa flèche maximale afin d'éviter un contact entre la membrane et le fond de la cavité, ce qui fausserait les mesures dans la plage de mesure. Néanmoins, il pourrait être prévu d'ajuster la profondeur pour que la membrane entre en contact avec le fond de la cavité pour des pressions élevées, qui seraient en dehors de la plage de mesure du capteur. Le fond de la cavité formerait alors une butée pour la membrane, évitant la détérioration de la membrane et protégeant ainsi le capteur.

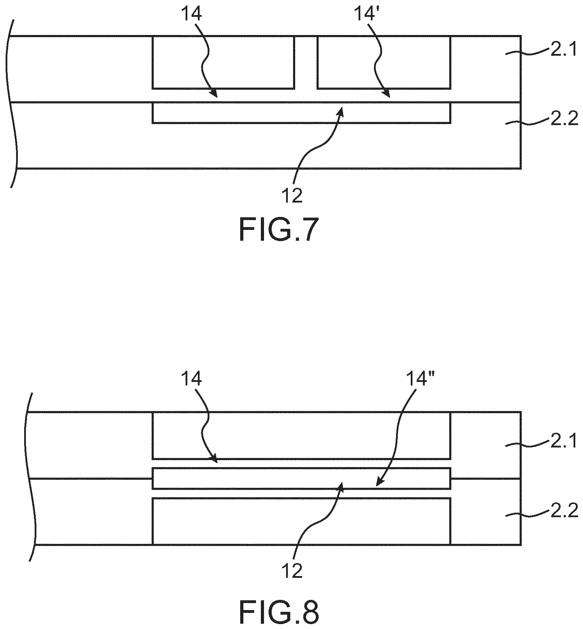

En variante, il pourrait être prévu que la zone de mesure comporte deux parois déformables 14, 14' (figure 7). Les deux parois déformables 14, 14' sont parallèles au plan du capteur et sont juxtaposées. Selon une autre variante représentée sur la figure 8, le fond 12.1 de la cavité 12 présente une épaisseur lui permettant de se déformer sous la différence de pression, formant ainsi une paroi déformable 14". Des moyens de mesure de la déformation de cette deuxième paroi déformable 14" sont alors prévus. Ces moyens, par exemple de type jauge de contrainte, sont reliés au système extérieur par des moyens conducteurs électriques cheminant dans le corps jusqu'à la zone de connexion. De préférence la deuxième paroi déformable 14" a la même épaisseur que la paroi déformable 14.

Selon un autre mode de réalisation de l'invention, les moyens de mesure sont de type capacitif. Les moyens de mesure comportent une ou plusieurs électrodes portées par le fond de la cavité à l'intérieur de la cavité et une ou plusieurs électrodes en regard de celle(s) ci, portée(s) par la membrane de sorte à former des condensateurs dont la capacité varie en fonction de la déformation de la membrane. Dans le cas d'une cavité comportant deux membranes déformables telle que représentée sur la figure 7, au moins une électrode est positionnée sur la face de chaque membrane déformable située à l'intérieur de la cavité, au moins une électrode fixe pouvant être formée par le substrat 2.2 ou déposée sur le substrat. Deux variations de capacité sont alors mesurées. Si les deux ensembles formés par chacune des membranes et la ou les électrodes qu'elle porte ont des propriétés mécaniques proches ou identiques, les variations de capacité mesurées seront proches ou identiques. On peut envisager de connecter ces deux capacités ou plus en parallèle pour augmenter le signal. Cette réalisation présente l'avantage d'avoir une surface importante et donc de permettre l'obtention d'une forte capacité, et une déformation des membranes limitée.

Dans le cas du capteur de la figure 8, au moins une électrode est positionnée sur la face de chaque membrane déformable située à l'intérieur de la cavité. Les électrodes sont alors en regard. On mesure alors une variation de capacité entre les membranes déformables.

A la fois pour le capteur de la figure 7 et pour celui de la figure 8, la connectique jusqu'aux plots 26 est réalisée au moyen de conducteurs 24. Avantageusement, ces électrodes sont réalisées en même temps et dans le même matériau que les conducteurs 24.

Dans un autre mode de réalisation représenté sur les figures 9A et 9B, la paroi mobile 214 peut comporter une partie centrale 214.1 sensiblement indéformable, une zone périphérique 214.2 apte à se déformer et des poutres 214.3 s'étendant de la partie centrale 214.1 aux bords de la paroi mobile sur la zone périphérique 214.2. La partie centrale 214.1 peut présenter une épaisseur sensiblement plus grande que celle de la zone périphérique. La zone périphérique sert alors principalement à fermer la cavité 12 de référence pour assurer l'herméticité. Sous l'effet d'une différence de pression, la partie centrale se déplace parallèlement à elle-même. Ce déplacement peut être mesuré par variation de capacité, par exemple entre la partie central et le fond de la cavité, ou au moyen de jauges de contraintes disposées sur des poutres. 214.3.

La sensibilité du capteur peut alors être réglée en ajustant la rigidité apportée par les poutres, par exemple en choisissant une géométrie adaptée des poutres. Il est alors possible de réaliser de façon simple des capteurs couvrant différents gammes de pression sur un même substrat en jouant sur les dimensions des poutres, i.e. leur longueur et/ou leur largeur. En effet dans le cas d'un capteur comportant une membrane simple, la variation de la rigidité est obtenue en faisant varier la profondeur de l'amincissement local du substrat qui est obtenu par gravure, or ceci est relativement complexe à réaliser puisqu'en général la profondeur de gravure est identique sur tout le substrat

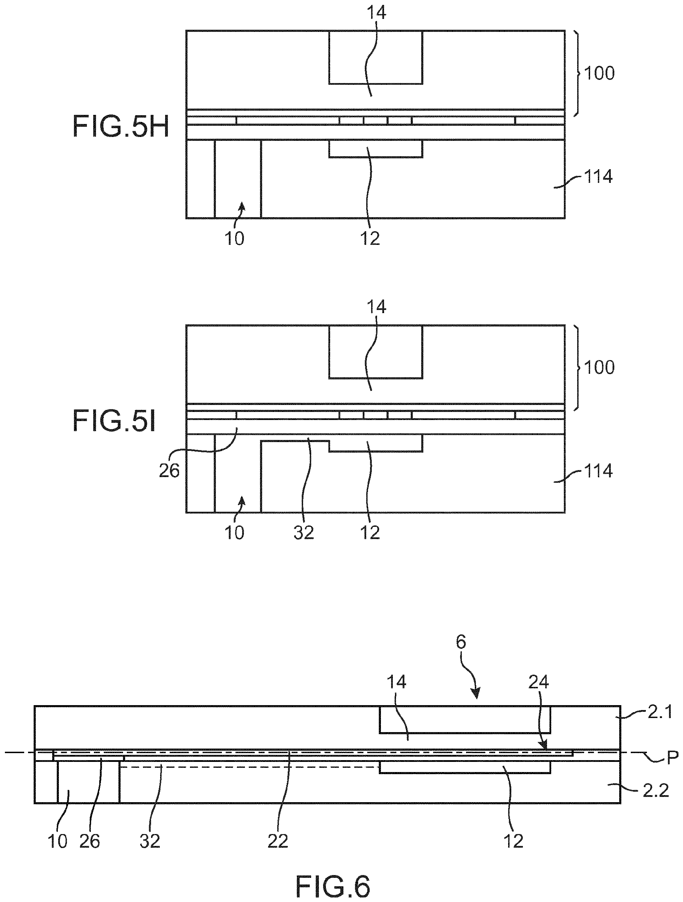

Sur la figure 6, on peut voir un exemple de réalisation d'un capteur de pression relative. Ce capteur se distingue du capteur de pression absolue de la figure 1 en ce que la cavité 12 n'est plus à la pression de référence mais est connectée fluidiquement à l'environnement extérieur.

Dans l'exemple représenté et de manière particulièrement avantageuse la connexion fluidique est réalisée au moyen d'un canal 32 formé entre les substrats ou dans l'un ou l'autre des substrats entre la cavité 12 et la zone de connexion 10. Puisque le canal 32 débouche dans la zone de connexion 10 qui est isolée du milieu à mesurer, il n'y a aucun risque que des éléments du milieu à mesurer puissent accéder à la cavité 12 via le canal 32. Une section longitudinale du canal 32 est par exemple visible sur la figure 6. De préférence, le canal 32 s'étend parallèlement la paroi mobile ou déformable.

Le capteur de pression selon l'invention présente les avantages suivants :
- il permet de mesurer une large gamme de pression grâce à la mise en œuvre d'au moins une membrane, les valeurs extrêmes de la gamme sont fixées par le choix des dimensions de la membrane.
- il est robuste et présente une durée de vie augmentée, en disposant les moyens de mesure à l'intérieur de la cavité, ce qui les protège du milieu extérieur qui peut être éventuellement agressif et en disposant la zone de connexion à l'environnement dans une zone éloignée de la zone de mesure.
- il est de réalisation simplifiée, fiable et de prix de revient réduit puisque la reprise de contact des moyens de mesure ne se fait pas en face arrière de la membrane.
- la mise en œuvre d'une cavité remplie d'huile est évitée, évitant le problème de métrologie et réduisant les coûts de fabrication.
- il présente un encombrement réduit, le capteur présente une configuration plane avec une épaisseur qui peut être réduite, la membrane et les moyens de connexion étant dans le même plan ou des plans parallèles. Au contraire dans les capteurs de l'état de la technique, la membrane est perpendiculaire aux moyens de connexion, ils présentent alors une épaisseur importante.

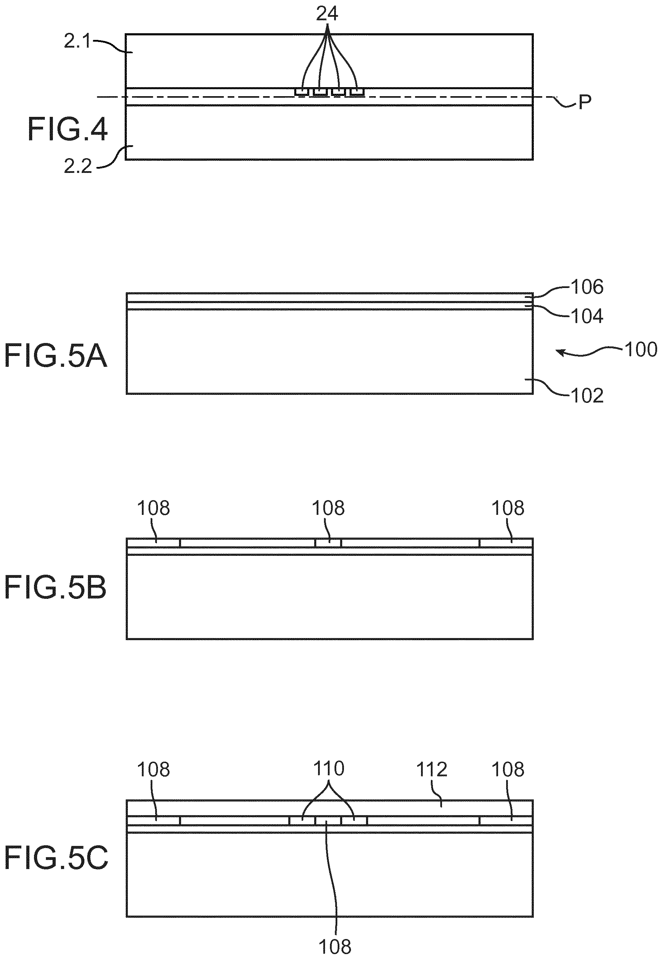

Un exemple de procédé de réalisation d'un capteur de pression des figures 1 à 4 va maintenant être décrit en relation avec les figures 5A à 5I.

On part d'un substrat qui peut par exemple être soit un substrat en silicium soit un substrat SOI (Silicon on insulator en terminologie anglo-saxonne pour substrat sur isolant). Sur la figure 5A, il s'agit d'un substrat SOI 100, comportant un substrat support en matériau semi-conducteur, par exemple en silicium 102, une couche de matériau diélectrique 104 par exemple un oxyde, par exemple un BOX (pour Buried Oxide en terminologie anglo-saxonne) et une couche de silicium 106. Par exemple, la couche BOX a une épaisseur de 2 µm et la couche de Si 106 a une épaisseur de 0,2 µm.

Lors d'une étape suivante, les jauges de contrainte et les conducteurs électriques sont définis dans la couche de silicium 106, par exemple au moyen d'une oxydation de silicium localisé (LOCOS). Le procédé LOCOS consiste à réaliser une oxydation de la couche de silicium, dans le cas présent de toute l'épaisseur de la couche 106 par l'intermédiaire d'un masque habituellement en Si₃N₄ (nitrure de silicium). L'oxydation est effectuée par oxydation thermique, par exemple au moyen de vapeur d'eau à une température de l'ordre de 1100°C. Le masque de protection est ensuite retiré par gravure chimique ou plasma. Pendant l'étape d'oxydation, la face arrière du substrat silicium s'oxyde aussi s'il n'y a pas de protection. On obtient des zones oxydées 108 dans la couche 106.

L'élément ainsi obtenu est représenté sur la figure 5B.

Lors d'une étape suivante, les jauges et les conducteurs électriques sont formés par dopage, par exemple par implantation du silicium de la couche 104 dans les zones non oxydées. Les zones des jauges dopées sont désignées 110. Le dopage des jauges et des conducteurs peut être différent et adapté à leur fonction. Par exemple des zones peuvent être très fortement dopées pour réaliser les conducteurs, ils présenteront ainsi une faible résistance, et des zones peuvent être moyennement dopées pour réaliser les jauges, elles présenteront ainsi une forte sensibilité.

L'élément ainsi obtenu est représenté sur la figure 5C.

Lors d'une étape suivante, on réalise une encapsulation des jauges et conducteurs électriques par exemple en formant une couche 112 sur la face avant de l'empilement de la figure 5C. Cette couche est par exemple un oxyde haute température ou HTO (High Temperature Oxide en terminologie anglo-saxonne) déposée par une technique de CVD. Cette couche isolante électrique va permettre d'isoler les conducteurs électriques du deuxième substrat lorsque les deux substrats seront assemblés.

Une étape de planarisation de la couche 112 a avantageusement lieu, par exemple par polissage mécano-chimique.

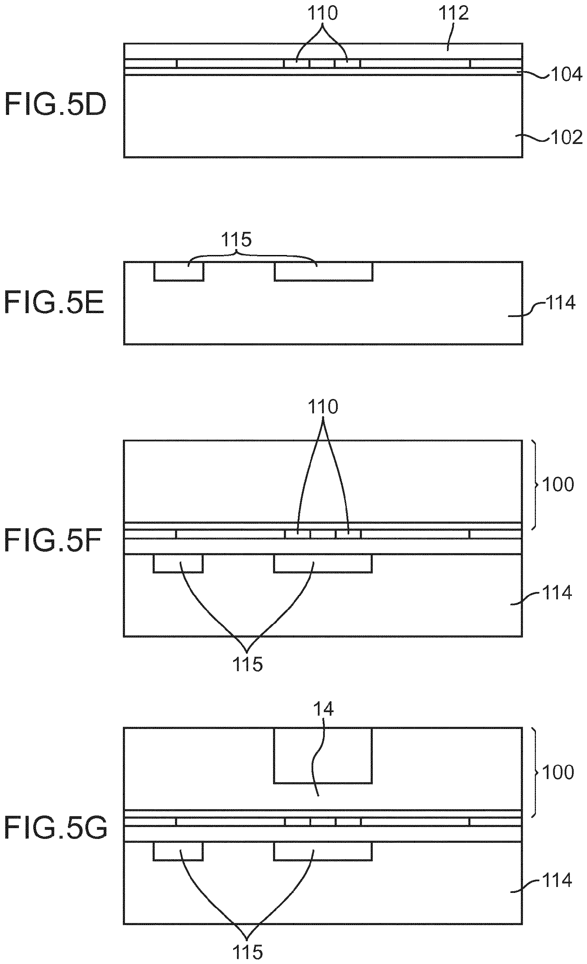

L'élément ainsi obtenu est représenté sur la figure 5D.

Ensuite, on part d'un deuxième substrat 114 par exemple en silicium ou tout autre semi-conducteur adapté ou un substrat verre, celui-ci est représenté sur la figure 5E.

Lors d'une étape suivante, la face avant du deuxième substrat 114 est structurée pour former des zones 115 destinées à délimiter la cavité et la zone de connexion avec le premier substrat. Cette structuration est faite par lithographie et gravure par exemple par gravure réactive ionique profonde ou DRIE pour Deep Reactive Ion Etching en terminologie anglo-saxonne dans le cas d'un substrat en silicium.

Dans le cas de la réalisation d'un capteur de pression relative, le canal fluidique est réalisé lors de cette étape.

Lors d'une étape suivante, l'élément de la figure 5D et le deuxième substrat 114 structuré sont assemblés par leur face avant. Dans le cas d'un capteur de pression absolu l'assemblage se fait sous vide puisque la cavité est scellée lors de cette étape. Le scellement est par exemple un scellement direct ou moléculaire. En variante le scellement peut être eutectique, anodique ou mettant en œuvre une colle ou un polymère.

L'élément ainsi obtenu est représenté sur la figure 5F.

Lors d'une étape suivante, on forme la membrane. Pour cela on structure le premier substrat par exemple on réalise une lithographie et une gravure en face arrière du premier substrat au droit de la cavité formée dans le deuxième substrat. La gravure est par exemple une gravure DRIE.

L'élément ainsi obtenu est représenté sur la figure 5G.

Lors d'une étape suivante, la zone de connexion 10 est dégagée par structuration du deuxième substrat, par exemple on réalise une lithographie et une gravure en face arrière du deuxième substrat. La gravure est par exemple une gravure DRIE. En variante, le premier substrat pourrait être structuré pour réaliser la zone de connexion.

Un capteur de pression absolu obtenu par le procédé selon l'invention est représenté sur la figure 5H
Sur la figure 5I, on peut voir un capteur de pression relative obtenu par le procédé décrit. Dans l'exemple représenté, le canal 32 est réalisé en face avant du deuxième substrat, par exemple par lithographie et gravure. En variante, il peut être réalisé dans la couche isolante électrique du premier substrat.

La réalisation dans des plans parallèles est particulièrement adaptée aux techniques de fabrication de la microélectronique.

Le capteur de pression peut être mis en œuvre dans de nombreuses applications. Il peut permettre la mesure de pression sur banc de test pour moteurs (avionique, automobile), la mesure de pression en environnement sévère, par exemple dans la recherche et l'exploitation pétrolière. Il peut également permettre d'effectuer des contrôles de procédés, par exemple des procédés d'injection plastique, .... Dans le domaine automobile, il peut permettre un contrôle de l'allumage, de l'échappement... Dans le domaine de l'avionique, il peut permettre des contrôles du moteur, des contrôles hydrauliques...

Le capteur de pression selon l'invention peut être mis en œuvre dans le domaine du génie civil. Par exemple il peut permettre la mesure de pression dans les canalisations transportant un liquide, par exemple de l'eau.

Lors d'une étape suivante, l'élément de la figure 5D et le deuxième substrat 114 structuré sont assemblés par leur face avant. Dans le cas d'un capteur de pression absolu l'assemblage se fait sous vide puisque la cavité est scellée lors de cette étape. Le scellement est par exemple un scellement direct ou moléculaire. En variante le scellement peut être eutectique, anodique ou mettant en œuvre une colle ou un polymère.

L'élément ainsi obtenu est représenté sur la figure 5F.

Lors d'une étape suivante, on forme la membrane. Pour cela on structure le premier substrat par exemple on réalise une lithographie et une gravure en face arrière du premier substrat au droit de la cavité formée dans le deuxième substrat. La gravure est par exemple une gravure DRIE.

L'élément ainsi obtenu est représenté sur la figure 5G.

Lors d'une étape suivante, la zone de connexion 10 est dégagée par structuration du deuxième substrat, par exemple on réalise une lithographie et une gravure en face arrière du deuxième substrat. La gravure est par exemple une gravure DRIE. En variante, le premier substrat pourrait être structuré pour réaliser la zone de connexion.

Un capteur de pression absolu obtenu par le procédé selon l'invention est représenté sur la figure 5H
Sur la figure 5I, on peut voir un capteur de pression relative obtenu par le procédé décrit. Dans l'exemple représenté, le canal 32 est réalisé en face avant du deuxième substrat, par exemple par lithographie et gravure. En variante, il peut être réalisé dans la couche isolante électrique du premier substrat.

La réalisation dans des plans parallèles est particulièrement adaptée aux techniques de fabrication de la microélectronique.

Le capteur de pression peut être mis en œuvre dans de nombreuses applications. Il peut permettre la mesure de pression sur banc de test pour moteurs (avionique, automobile), la mesure de pression en environnement sévère, par exemple dans la recherche et l'exploitation pétrolière. Il peut également permettre d'effectuer des contrôles de procédés, par exemple des procédés d'injection plastique, .... Dans le domaine automobile, il peut permettre un contrôle de l'allumage, de l'échappement... Dans le domaine de l'avionique, il peut permettre des contrôles du moteur, des contrôles hydrauliques...

Le capteur de pression selon l'invention peut être mis en œuvre dans le domaine du génie civil. Par exemple il peut permettre la mesure de pression dans les canalisations transportant un liquide, par exemple de l'eau.

## Revendications

1. Installation comportant un milieu dont on souhaite mesurer la pression, une paroi (30) séparant ledit milieu d'un environnement extérieur, au moins un passage (28) traversant dans la paroi (30) et au moins un capteur de pression apte à mesurer au moins des pressions faibles comportant un corps (2) s'étendant dans un plan (P), dit plan du capteur, ledit corps (2) comprenant une première extrémité (4) et une deuxième extrémité (8), une zone de mesure (6), située à la première extrémité (4) du corps, une zone de connexion (10) située à la deuxième extrémité (8) du corps, ladite zone de mesure (6) comportant au moins une cavité (12) délimitée par au moins une paroi mobile ou déformable (14) sous l'effet d'une différence de pression entre l'intérieur de la cavité et un milieu extérieur (E), ladite paroi mobile ou déformable (14) étant située au moins au repos dans un plan parallèle au plan du capteur (P), ledit capteur comportant également des moyens de mesure du déplacement ou de la déformation de la paroi mobile ou déformable (14), lesdits moyens de mesure étant situés dans la cavité (12), des moyens de connexion électrique reliant les moyens de mesure à la zone de connexion (10), lesdits moyens de connexion électrique étant disposés dans le corps (2), le corps (2) étant destiné à être disposé au moins en partie dans le milieu dont on souhaite mesurer la pression de sorte que ladite première extrémité (4) soit dans ledit milieu, et la zone de connexion (10) étant destinée à être isolée du milieu pour permettre une connexion électrique avec un environnement extérieur séparé du milieu, dans lequel le capteur comporte également dans le corps, un canal fluidique (32) entre la cavité (12) et la zone de connexion (10) de sorte à relier la cavité (12) à l'environnement extérieur, le capteur étant un capteur de pression relative entre l'environnement extérieur et le milieu à mesurer, le corps (2) du capteur étant monté de manière étanche dans le passage (28) à travers la paroi (30) de sorte que la zone de mesure (6) soit dans le milieu et la zone de connexion (10) soit dans l'environnement extérieur.

2. Installation selon la revendication 1, dans laquelle le canal fluidique (32) s'étend parallèlement à la paroi mobile ou déformable (14).

3. Installation selon la revendication 1 ou 2, dans laquelle les moyens de mesure comportent au moins une jauge en matériau piézorésistif ou piézoélectrique (20) disposée sur une face (14.1) de la paroi mobile ou déformable (14) située dans la cavité (12).

4. Installation selon la revendication 3, dans laquelle les jauges en matériau piézorésistif ou piézoélectrique (20) sont montées en pont de Wheatstone.

5. Installation selon la revendication 1 ou 2, dans laquelle les moyens de mesure sont des moyens de mesure capacitifs.

6. Installation selon l'une des revendications 1 à 5, comportant dans la zone de mesure, au moins deux parois déformables situées au moins au repos dans un ou des plans parallèles au plan du capteur (P).

7. Installation selon l'une des revendications 1 à 6, dans laquelle le corps comporte un premier substrat (2.1) et un deuxième substrat (2.2) solidarisés l'un à l'autre, les moyens de connexion étant tout ou partie disposés entre et/ou dans le premier substrat (2.1) et le deuxième substrat (2.2).

8. Installation selon l'une des revendications 1 à 7, dans laquelle la paroi mobile ou déformable (14) comporte une membrane.

9. Installation selon l'une des revendications 1 à 7, dans laquelle la paroi mobile comporte une zone centrale sensiblement indéformable, une zone périphérique déformable et des moyens destinés à rigidifier la zone périphérique.

10. Installation selon la revendication 9, dans laquelle les moyens destinés à rigidifier la membrane comportent au moins une poutre.

11. Procédé de fabrication d'une installation selon l'une des revendications 1 à 10, comportant les étapes
a) à partir d'un premier substrat, de réalisation en face avant dudit premier substrat des moyens de mesure et des moyens de connexion,
b) à partir d'un deuxième substrat, de structuration d'une face avant du deuxième substrat pour délimiter une partie de la cavité et une partie de la zone de connexion,
c) solidarisation du premier et du deuxième substrat par leurs faces avant de sorte que les moyens de mesure soient en face de la partie de la cavité délimitée dans le deuxième substrat,
d) structuration du premier et/ou du deuxième substrat pour accéder aux moyens de connexion et former la zone de connexion et pour former le canal fluidique,
e) montage du corps du capteur de manière étanche dans le passage (28) à travers la paroi (30) de sorte que la zone de mesure (6) soit dans le milieu et la zone de connexion (10) soit dans l'environnement extérieur.

12. Procédé de fabrication selon la revendication 11, dans lequel après l'étape c) le premier substrat est structuré pour former la paroi déformable, par exemple par amincissement au niveau des moyens de mesure.

13. Procédé de fabrication selon la revendication 11 ou 12, comportant, lors de l'étape a), la formation d'une couche isolante électrique sur les moyens de connexion.

## Patentansprüche

1. Anordnung, enthaltend ein Medium, dessen Druck gemessen werden soll, eine Wand (30), die das Medium von einer äußeren Umgebung trennt, mindestens einen Durchgang (28) durch die Wand (30) und mindestens einen Drucksensor, der dazu geeignet ist, zumindest niedrige Druckwerte zu messen und einen Körper (2) aufweist, der sich in einer Ebene (P), Sensorebene genannt, erstreckt, wobei der Körper (2) ein erstes Ende (4) und ein zweites Ende (8), einen sich am ersten Ende (4) des Körpers befindenden Messbereich (6) und einen sich am zweiten Ende (8) des Körpers befindenden Verbindungsbereich (10) enthält, wobei der Messbereich (6) mindestens einen Hohlraum (12) aufweist, der von mindestens einer unter der Wirkung einer Druckdifferenz zwischen dem Inneren des Hohlraums und einem äußeren Medium (E) beweglichen bzw. verformbaren Wand (14) eingegrenzt wird, wobei die bewegliche bzw. verformbare Wand (14) zumindest in Ruhestellung in einer Ebene parallel zur Sensorebene (P) liegt, wobei der Sensor ferner Mittel zum Messen der Verlagerung bzw. Verformung der beweglichen bzw. verformbaren Wand (14) enthält, wobei sich die Messmittel in dem Hohlraum (12) befinden, sowie elektrische Verbindungsmittel, welche die Messmittel mit dem Verbindungsbereich (10) verbinden, wobei die elektrischen Verbindungsmittel in dem Körper (2) angeordnet sind, wobei der Körper (2) dazu bestimmt ist, zumindest teilweise in dem Medium angeordnet zu werden, dessen Druck gemessen werden soll, so dass sich das erste Ende (4) in dem Medium befindet, und wobei der Verbindungsbereich (10) dazu bestimmt ist, vom Medium isoliert zu werden, um eine elektrische Verbindung mit einer vom Medium getrennten äußeren Umgebung zu ermöglichen, wobei der Sensor ferner in dem Körper einen Strömungskanal (32) zwischen dem Hohlraum (12) und dem Verbindungsbereich (10) aufweist, um den Hohlraum (12) mit der äußeren Umgebung zu verbinden, wobei der Sensor ein Sensor für den relativen Druck zwischen der äußeren Umgebung und dem zu messenden Medium ist, wobei der Körper (2) des Sensors im Durchgang (28) durch die Wand (30) abgedichtet angebracht ist, so dass der Messbereich (6) sich im Medium befindet und der Verbindungsbereich (10) sich in der äußeren Umgebung befindet.

2. Anordnung nach Anspruch 1, wobei der Strömungskanal (32) sich parallel zur beweglichen bzw. verformbaren Wand (14) erstreckt.

3. Anordnung nach Anspruch 1 oder 2, wobei die Messmittel zumindest ein Messelement aus piezoresistivem oder piezoelektrischem Material (20) enthalten, das an einer Seite (14.1) der beweglichen bzw. verformbaren Wand (14) angeordnet ist, die sich in dem Hohlraum (12) befindet.

4. Anordnung nach Anspruch 3, wobei die Messelemente aus piezoresistivem oder piezoelektrischem Material (20) zu einer Wheatstone-Brücke verschaltet sind.

5. Anordnung nach Anspruch 1 oder 2, wobei die Messmittel kapazitive Messmittel sind.

6. Anordnung nach einem der Ansprüche 1 bis 5, enthaltend zumindest zwei verformbare Wände in dem Messbereich, die zumindest in Ruhestellung in einer oder mehreren Ebenen parallel zur Sensorebene (P) liegen.

7. Anordnung nach einem der Ansprüche 1 bis 6, wobei der Körper ein erstes Substrat (2.1) und ein zweites Substrat (2.2) enthält, die fest miteinander verbunden sind, wobei die Verbindungsmittel ganz oder teilweise zwischen und/oder in dem ersten Substrat (2.1) und dem zweiten Substrat (2.2) angeordnet sind.

8. Anordnung nach einem der Ansprüche 1 bis 7, wobei die bewegliche bzw. verformbare Wand (14) eine Membran enthält.

9. Anordnung nach einem der Ansprüche 1 bis 7, wobei die bewegliche Wand einen im Wesentlichen unverformbaren Mittelbereich, einen verformbaren Umfangsbereich und Mittel zum Versteifen des Umfangsbereichs aufweist.

10. Anordnung nach Anspruch 9, wobei die Mittel zum Versteifen der Membran zumindest einen Steg enthalten.

11. Verfahren zum Herstellen einer Anordnung nach einem der Ansprüche 1 bis 10, umfassend die Schritte
a) ausgehend von einem ersten Substrat Ausbilden der Messmittel und der Verbindungsmittel an der Vorderseite des ersten Substrats,
b) ausgehend von einem zweiten Substrat Strukturieren einer Vorderseite des zweiten Substrats zum Eingrenzen eines Teils des Hohlraums und eines Teils des Verbindungsbereichs,
c) festes Verbinden des ersten und des zweiten Substrats mit ihren Vorderseiten, so dass die Messmittel dem in dem zweiten Substrat eingegrenzten Teil des Hohlraums gegenüberliegen,
d) Strukturieren des ersten und/oder des zweiten Substrats, um Zugang zu den Verbindungsmittel zu haben und den Verbindungsbereich auszubilden und um den Strömungskanal auszubilden,
e) Anbringen des Sensorkörpers in abgedichteter Weise in dem Durchgang (28) durch die Wand (30) derart, dass der Messbereich (6) sich in dem Medium befindet und der Verbindungsbereich (10) sich in der äußeren Umgebung befindet.

12. Herstellungsverfahren nach Anspruch 11, wobei nach dem Schritt c) das erste Substrat strukturiert wird, um die verformbare Wand auszubilden, beispielsweise durch Verjüngen im Bereich der Messmittel.

13. Herstellungsverfahren nach Anspruch 11 oder 12, umfassend in Schritt a) das Ausbilden einer elektrisch isolierenden Schicht an den Verbindungsmittel.

## Claims

1. A facility comprising a medium the pressure of which is desired to be measured, a wall (30) separating said medium from an external environment, at least one passage (28) passing through the wall (30) and least one pressure sensor able to measure at least low pressures comprising a body (2) extending in a plane (P), called a sensor plane, said body (2) comprising a first end (4) and a second end (8), a measurement zone (6), located at the first end (4) of the body, a connection zone (10) located at the second end (8) of the body, said measurement zone (6) comprising at least one cavity (12) delimited by at least one wall (14) being movable or deformable under the effect of a pressure difference between the inside of the cavity and an external medium (E), said movable or deformable wall (14) being located at least at rest in a plane parallel to the sensor plane (P), said sensor also comprising measurement means for measuring the displacement or deformation of the movable or deformable wall (14), said measurement means being located in the cavity (12), electrical connection means connecting the measurement means to the connection zone (10), said electrical connection means being disposed in the body (2), the body (2) being intended to be disposed at least partly in the medium the pressure of which is desired to be measured such that said first end (4) is in said medium, and the connection zone (10) being intended to be insulated from the medium to allow an electrical connection with an external environment separated from the medium, wherein the sensor also comprises in the body, a fluid channel (32) between the cavity (12) and the connection zone (10) so as to connect the cavity (12) to the external environment, the sensor being a relative pressure sensor for the relative pressure between the external environment and the medium to be measured, the body (2) of the sensor being sealingly mounted in the passage (28) through the wall (30) such that the measurement zone (6) is in the medium and the connection zone (10) is in the external environment.

2. The facility according to claim 1, wherein the fluid channel (32) extends in parallel to the movable or deformable wall (14).

3. The facility according to claim 1 or 2, wherein the measurement means comprise at least one gauge of piezoresistive or piezoelectric material (20) disposed on a face (14.1) of the movable or deformable wall (14) located in the cavity (12).

4. The facility according to claim 3, wherein the gauges of piezoresistive or piezoelectric material (20) are mounted as a Wheatstone bridge.

5. The facility according to claim 1 or 2, wherein the measurement means are capacitive measurement means.

6. The facility according to one of claims 1 to 5, comprising in the measurement zone, at least two deformable walls located at least at rest in one or more plane(s) parallel to the sensor plane (P).

7. The facility according to one of claims 1 to 6, wherein the body comprises a first substrate (2.1) and a second substrate (2.2) secured to each other, the connection means being wholly or partly disposed between and/or in the first substrate (2.1) and the second substrate (2.2).

8. The facility according to one of claims 1 to 7, wherein said movable or deformable wall (14) comprises a membrane.

9. The facility according to one of claims 1 to 7, wherein the movable wall comprises a substantially undeformable central zone, a deformable peripheral zone and means for rigidifying the peripheral zone.

10. The facility according to claim 9, wherein the means for rigidifying the membrane comprise at least one beam.

11. A manufacture method for manufacturing a facility according to one of claims 1 to 10, comprising the steps of
a) from a first substrate, making measurement means and connection means in the front face of said first substrate,
b) from a second substrate, structuring a front face of the second substrate to delimit a part of the cavity and a part of the connection zone,
c) securing the first and the second substrate by their front faces such that the measurement means face the part of the cavity delimited in the second substrate,
d) structuring the first or second substrate to access the connection means and form the connection zone and form the fluid channel,
e) sealingly mounting the body of the sensor in the passage (28) through the wall (30) such that the measurement zone (6) is in the medium and the connection zone (10) is in the external environment.

12. The manufacture method according to claim 11, wherein after step c), the first substrate is structured to form the deformable wall, for example by thinning at the measurement means.

13. The manufacture method according to claim 11 or 12, comprising, during step a), the formation of an electrically insulating layer on the connection means.
